# EUROPEAN PATENT APPLICATION

(11) **EP 2 722 803 A1**
(43) Date of publication of application: **23.04.2014**
(21) Application number: 12306289.5
(22) Date of filing: 18.10.2012
(51) Int. Cl.: G06Q 20/40, G06F 21/30

(54) **System and method for remotely unlocking security devices**

(71) Applicant: Gemalto SA, 92190 Meudon (FR)
(72) Inventor: Gullberg, Peter, 13705 La Ciotat (FR)

(57) **Abstract**

The present invention relates to a method to remotely unlock a personal identification number (PIN) in a security device (S_DEV) of a user (USR) comprising steps of, for the security device (S_DEV), once the personal identification number is locked (E0), generating (E1) a challenge (CL) and displaying (E2) it (CL) to the user (USR), for a back-end device (BE_DEV) having an interface enabling the user (USR) to identify, asking (E0') the user (USR) for identification and for entering (E3) the challenge (CL) in. Then the back-end device (BE_DEV) generates (E4) and displays (E5) a response (R) based on the challenge (CL). The security device (S_DEV) asks the user (USR) to enter (E6) the response (R) and checks (E7) if the response (R) corresponds to the challenge (CL), and if yes, it unlocks (E8) the personal identification number (PIN).

## Description

### FIELD OF THE INVENTION

The present invention relates to a method to remotely unlock a personal identification number in a security device of a user.

### BACKGROUND OF THE INVENTION

Personal identification number (PIN) is a method to prove your identity, and is often referred to as something you know. In combination with something you have, such as a card or a device enables you to do what is referred to as two-factor authentication.

PIN is used in nearly every imaginable context, ranging from opening doors, open up your mobile phone, or when paying with a credit card. This means that customer needs to remember several PIN, as it might be impossible or not advisable to have the same PIN for all contexts. Having to remember a PIN is difficult and inconvenient for the user, as the user is forced to keep a value in memory that is not natural to him. Studies show that 18% of users forget their password on an annual basis [A Large Scale Study of Web Password Habits, Florencio et. Al, Microsoft].

Studies also show that users have problem to remember a long PIN. To make the PIN shorter and to avoid brute force attacks on the PIN, there is often an associated try counter, such as a PIN Try Counter on a chip card or a token device.

If a wrong PIN is tried to many times, the PIN is locked, and there need to be some unlocking method or replacement process.

It also well known that many of the users that lock their PIN actually knows it, but failed at the moment to correctly recall it. There are a quite large number of reasons why it fails, it might be user fatigue or a high stress level, both makes it significantly harder for the user to recall correct PIN. There might also be technology or ambient problems, ranging from not using eyeglasses, ambient lightning, or bad user interface. There might also be related to contextual or procedural errors [Norman, D. A. (1979). Slips of mind and an outline for a theory of action (Tech. Rep.). La Jolla: University of California, San Diego, Center for Human Information Processing], where user mixes the PIN between credit cards, as he cannot see the card inserted into the ATM, the user can also mix his token PIN with his phone banking PIN, he can make procedural error where he tries to enter his mobile security code, but the phone ask for the PIN to the SIM. For tokens there are also a number of issues, that the device was locked by accidental pressing in the pocket. Tokens can also be mixed up among family members and PIN is entered on the wrong device. It may also occur that someone played with it until the PIN was locked.

As, when an incorrect PIN was entered to many times, the PIN is locked on the security device. All the above factors account for a substantial number of PIN being locked in various devices, causing inconvenience for the user and creating customer support.

One way to resolve the issue of locked PIN is to have the device replaced. This is highly inconvenient for the user, as he needs to visit the bank in order to replace his credit card or device.

Another method is to give the user a Personal Unlocking Key (PUK) that needs to be kept secret. When entering the PUK, the device unlocks the PIN and asks the user to enter a new PIN. This is often used in the telecom industry to unlock SIM Card when PIN is locked.

A PUK creates a number of problems as it requires the user to store the PUK, and this is easily lost by the user. If the user is travelling, he may not bring the PUK with him, and therefore have no means to unlock his device. In addition the PUK becomes a valuable asset for a thief in combination with a card or a device.

### SUMMARY OF THE INVENTION

In the light of the present art and drawbacks, we propose a method that overcomes the drawbacks of the present art, in a more convenient and secure way.

The present invention relates, in its broadest sense, to a method to remotely unlock a personal identification number in a security device of a user comprising steps of:
- for the security device, once the personal identification number is locked, generating a challenge;
- for the security device, storing the challenge and displaying the challenge to the user;
- for a back-end device having an interface enabling the user to identify, asking the user for identification,
- for the back-end device, once the user is identified, prompting an acquisition field for the user to enter the challenge in,
- for the back-end device, generating a response based on the challenge,
- for the back-end device, displaying the response to the user,
- for the security device, prompting an acquisition field for the user to enter the response in,
- for the security device, checking if the response corresponds to the challenge, and if yes, unlocking the personal identification number.

Thus the invention is a method that enables the back-end, typically a bank, to unlock PIN remotely on security devices using a one-time-unlocking code that allows the bank to unlock PIN even if user cannot prove his identity. The security device and the back-end device are sharing a secret enabling the back-end device to calculate the response and the security device to check the response. Said secret key can be linked to the identity of the user.

The proposed invention can be fully automated through a voice response unit or through a web-based banking portal, but not limited to this, as soon as it enables the user to identify. It enables the bank to reduce customer support cost. Nevertheless it can occur that, even if the user can identify himself, he is not able to prove this identity.

According to a preferred embodiment, the method is such that:
- during the step of generation of the response, the back-end device is able to generate the response according at least two distinct calculation schemes and wherein,
- during the step of checking if the response corresponds to the challenge, the security device is able to detect that the response corresponds to the challenge with the one or the other of the calculation scheme,
- the unlocking step having different functions according to the calculation scheme detected.

With this embodiment, the unlocking method enables the bank to selectively determine how to unlock the PIN, based on if the user prove his identity or not.

No matter the reasons, there are situations where a customer needs to unlock his device and cannot authenticate himself/herself, for example while on vacation without access to the home address. In such situations where customer knows his PIN, it would be possible to generate an unlocking code remotely, that would unlock the device without asking for a new PIN. As the user knows the PIN to the security device, he can after the unlocking continue to use the device as normal. This solution will not only be convenient for the customer, it will also reduce customer support. As such unlocking process could be completely automated, either directly on the website or through an interactive voice response system, and thereby reducing the customer support load, as it is estimated that a customer support call is somewhere between 5$ to 10$.

According to an advantageous feature, the different functions of the unlocking include an unlocking without personal identification number change and an unlocking with mandatory change of the personal identification number.

This feature enables the back-end to adapt to the nature of the identification information provided by the user. If the user cannot prove his identity, the back-end device generates a unlocking response without PIN change. If the user can prove his identity, the back-end device generates a unlocking response with a mandatory change of the PIN.

Advantageously, a checksum is added to the challenge, said checksum being displayed with the challenge.

This enables the back-end device to check the rightness of the challenge generated by the security device.

The checksum can be one or more check-digits. This enables to validate that it is correctly transcribed.

According to an advantageous feature, the checksum being a cryptographic checksum generated from the challenge device, the method comprises, for the back-end device, a step of checking if the challenge corresponds to the security device, and if yes, continue the process to generate the response.

This feature enables the back-end device to have a check that the challenge originates from the security device. Here the verification consists in validating the checksum.

In an advantageous implementation, the step of asking for identification of the user comprises a login step on a web interface.

This implementation offers a nice and convenient user experience.

According to an advantageous feature, the identification comprises the step of asking the user for personal data. Such personal data can be date of birth, mother's maiden name, or any other data enabling the user to prove his/her identity. This is a very convenient and user friendly identification mean.

According to particular features, the challenge is generated from a counter or is generated from a random number. The counter can be based on time.

In a specific embodiment of the invention, the challenge comprises authentication data enabling the back-end device to authenticate the security device.

In such embodiment the challenge is typically calculated using the secret shared with the back-end. The back-end device can thus check that the received challenge comes from the right security device that is consequently authenticated.

The present invention also relates to a security device comprising means to implement the steps realized by the security device in a method of the invention.

It also relates to a back-end device having means to implement the steps realized by the back-end device in a method of the invention.

At last it relates to a system consisting of a token security device, a user interacting with customer support, and an associated back-end device capable of generating unlocking codes. The unlocking method of the token device is designed to provide a challenge that is being shown to the user, which provides this challenge value to the customer support.

To the accomplishment of the foregoing and related ends, one or more embodiment(s) comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed.
Figure 1 schematically shows an environment where a user interacts with a security device and a back-end device of the invention;
Figure 2 shows a flowchart of a method of the invention.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described. The following detailed description is not to be taken in a limiting sense and the scope of the present invention is defined only by the appended claims, appropriately interpreted, along with the full range of equivalents to which the claims are entitled. In the following description, when an action is said to be performed by a device, it is in fact executed by a microprocessor in this device controlled by instruction codes recorded in a program memory on the said device.

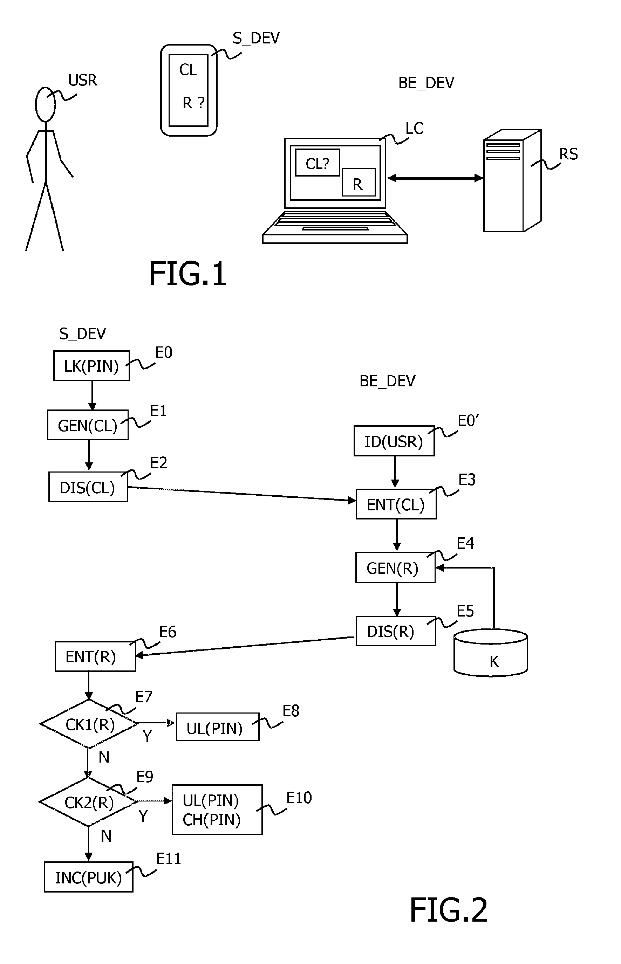

Figure 1 schematically shows an environment wherein the invention is implemented. A user USR has a security device S_DEV that was previously PIN locked. The locking mechanism is normally implemented using a PIN Try Counter in combination with a PIN Try Limit. Classically, the devices also contain a PUK Try Counter and corresponding limit but the behavior of PUK is not described here. In the description, the term "unlocking" refers to the PIN entrance being usable again.

The invention introduces a dynamic PUK instead of a static PUK, said dynamic PUK being provided by a back-end device BE_DEV, typically a local computer LC connected to a remote server RS.

Figure 2 shows a flowchart of the method of the invention that is implemented on both the security device S_DEV and the back-end device BE_DEV. The security device S_DEV shares a secret key K with the back-end device BE_DEV.

The method of the invention starts when the PIN is locked by the user in a step E0 after too many consecutive faulty attempts, or if the device is shipped in PIN locked state.

To unlock the PIN entrance, the first thing that happens is that the device generates a random value that is used as a challenge CL in a step E1 and presented to the user in a step E2, typically by displaying the challenge on a screen of the security device. Besides, the challenge CL is stored in the security device S_DEV. A challenge CL is generated for each complete unlocking cycle.

The challenge value is advantageously a 6 digit decimal number generated inside the device using a random number generator. Nevertheless, the device may support other challenge length.

To make the transcribing of the challenge more accurate, it's possible to optionally extend it with a check-digit. In that case, the device presents 7 digit number, i.e. 6 digits plus check-digits to the user.

The optional check-digit is appended as the last digit using known techniques. The check-digits provide a way of detecting incorrectly entered challenge value in the back-end and thereby reducing the errors in the process.

The check-digit added in the device is only used to validate that the challenge was correctly entered in the back-end system, and is not used for the calculations of the response code. This should be removed after successful validation by the back-end device.

The user provides the challenge CL to the back-end device BE_DEV in a step E3. Before this step the user needs to declare, and preferably, prove his identity in a step E0'. This step can be a login step on a helpdesk webpage or other type of identification. The login step can ask for a password. It can be completed by personal data. Once the user is identified and optionally been authenticated, a response R is calculated.

The invention does not strictly imply that the user can ask for an unlimited number of unlocking attempts without change of the PIN, the number of unlocking attempts can obviously be limited at least over time (one per day for example). Nevertheless, it is preferable that the user prove his/her identity. How this proving is done towards the back-end device, is not detailed here but personal data as the first name of a nephew or the mother maiden's name etc could be asked. Other alternative is to re-use the existing identification information, and in that case typically use the login information.

In a preferred embodiment, the challenge CL is provided in a field ENT(CL) on a web page of a customer's helpdesk displayed on the screen of the local computer LC and transferred to the remote server RS.

In a step E4, a response R to the challenge CL is generated by the back-end device BE_DEV.

The response generated is advantageously based on the HMAC-SHA1 Algorithm using a 160-bit Shared Secret K and challenge CL and use this as the counter C to form an 8 byte value. C is thus filled with the challenge CL, which is a 6-digit decimal value that is converted into hexadecimal. Then the Unlocking Mode (UM) is OR'ed into the most significant byte. Example is "0x02 00 00 00 00 01 E2 40" (UM=0x02, C=123456).

According to a preferred embodiment of the invention, the response R is susceptible to be calculated in several ways.

In this case, two Unlocking Modes (UM) are defined: 0x01= unlock without PIN change, 0x02=unlock with PIN change.

Response length is for instance 8 digits but other length may be supported by the device.

The response is R=OTP = HOTP(K,C) = Truncate (HMAC-SHA1(K,C)).

The calculated response R is displayed in a step E5. Preferably the remote server RS computes the response and returns it for display on the screen of the local computer LC.

The response R is thus given to the user, which enters it on the security device S_DEV in a step E6. After entering the response R, the device verifies it in a step E7.

If the entered response R corresponds to the challenge CL, the security device S_DEV unlocks PIN. To detect the correspondence, the security device S_DEV also computes the response R and using the stored challenge CL. If the two values are the same, the PIN is unlocked in a step E8.

In a preferred embodiment, depending on how the response R was calculated by the back-end device BE_DEV, the security device S_DEV will have two different internal processes.

In such an embodiment as shown on figure 2, step E7 checks if the entered response is equal to the response calculated through a first way, here with UM=0x01. If it is the case (Y), the PIN try counter will be simply reset without PIN change. The security device can then prompt a message of the type "unlock successful".

If this is not the case (N), the security device S_DEV checks if the entered response was calculated through the second way in a step E9 using UM=0x02 and the stored challenge CL. If it is the case (Y), the PIN try counter is reset and a new PIN is asked to be entered in a step E10. Advantageously the security device S_DEV prompts the user with a message "Unlock Successful!" and then continues with "Enter New PIN:", "Enter New PIN Again:", "New PIN Successful". An indication that the unlocking process was completed can also be displayed. The PUK counter can also be reset.

If this is not the case (N) in step E9, it can increment (E11) the PUK try counter. Then the PUK try counter is managed for instance as with a static PUK and a PUK locking is implemented after a given number of trials.

The response verification is thus a two-step process, where trial and error are realized to determine the valid response code, where we start with step E7 and if this is not correct we continue with step E9.

According to the invention, the security device S_DEV verifies the response generated by the back-end BE_DEV. The benefit of having a PIN reset without PIN change is that it indeed consists in an automated PIN unlocking process. This can then be used in a standard web-interface, and thereby reducing customer support calls.

It has to be noted that if automated unlocking process is used, it's highly suggested that user should implement an unlocking attempt counter to limit the number of automated unlocking to one per day and a maximum unlocking attempts, to prevent exhaustive search of PIN.

The challenge is used throughout the entire PIN unlocking cycle, until the PIN has been successfully unlocked. From a usability perspective, it's thus important that the generated challenge is maintained during the entire unlocking session, to prevent the user from seeing a new challenge each time the device timeout.

A consistent challenge for each PIN unlocking cycle, provides excellent user experience, as the unlocking code can be sent via email, SMS or other authenticated means. Furthermore, if the user has entered a successful response, from a user convenience perspective, the preferred way to implement the change PIN process is to make this persistent. In case the device timeout, or the user by accident powers off, the PIN change is continued immediately after the user restarts the device again. A timeout should also be implemented in order for the user to be able to restart the process and re-enter the same unlocking code if the process was not completed.

This also makes it possible to send out unlocking codes through other media.

The invention thus proposes a dynamic PIN unlocking mechanism for one-time-password based products that have PIN-entry functionality on the device. The invention enables the end-users to manage their PIN over the product lifetime. The invention offers a simple, user friendly and secure protocol for end-users.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive.

## Claims

1. Method to remotely unlock a personal identification number (PIN) in a security device (S_DEV) of a user (USR) comprising steps of:
- for the security device (S_DEV), once the personal identification number is locked (E0), generating (E1) a challenge (CL);
- for the security device (S_DEV), storing the challenge (CL) and displaying (E2) the challenge (CL) to the user (USR);
- for a back-end device (BE_DEV) having an interface enabling the user (USR) to identify, asking (E0') the user (USR) for identification,
- for the back-end device (BE_DEV), once the user (USR) is identified, prompting (E3) an acquisition field for the user (USR) to enter the challenge (CL) in,
- for the back-end device (BE_DEV), generating (E4) a response (R) based on the challenge (CL),
- for the back-end device (BE_DEV), displaying (E5) the response (R) to the user (USR),
- for the security device (S_DEV), prompting (E6) an acquisition field for the user (USR) to enter the response (R) in,
- for the security device (S_DEV), checking (E7) if the response (R) corresponds to the challenge (CL), and if yes, unlocking (E8) the personal identification number (PIN).

2. Method to remotely unlock a personal identification number (PIN) according to claim 1, wherein:
- during the step (E4) of generation of the response (R), the back-end device (BE_DEV) is able to generate the response (R) according at least two distinct calculation schemes and wherein,
- during the step of checking if the response corresponds to the challenge (CL), the security device (S_DEV) is able to detect (E7, E9) that the response (R) corresponds to the challenge (CL) with the one or the other of the calculation scheme,
- the unlocking step having different functions (E8, E10) according to the calculation scheme detected.

3. Method to remotely unlock a personal identification number (PIN) according to claim 2, wherein the different functions of the unlocking includes an unlocking (E8) without personal identification number (PIN) change and an unlocking (E10) with mandatory change of the personal identification number (PIN).

4. Method to remotely unlock a personal identification number (PIN) according to one of the preceding claims, wherein a checksum is added to the challenge (CL), said checksum being displayed with the challenge (CL).

5. Method to remotely unlock a personal identification number (PIN) according to one of the preceding claims, wherein the checksum is one or more check-digits.

6. Method to remotely unlock a personal identification number (PIN) according to one of claims 4 and 5, wherein, the checksum being a cryptographic checksum generated from the challenge (CL) in the security device (S_DEV), the method comprises, for the back-end device (BE_DEV), a step of checking if the challenge (CL) corresponds to the security device (S_DEV), and if yes, continue the process to generate the response (R).

7. Method to remotely unlock a personal identification number (PIN) according to one of the preceding claims, wherein the step of asking for identification (E0') of the user (USR) comprises a login step on a web interface.

8. Method to remotely unlock a personal identification number (PIN) according to one of the preceding claims, wherein the identification step (E0') comprises a step of asking the user (USR) for personal data.

9. Method to remotely unlock a personal identification number (PIN) according to one of the preceding claims, wherein the challenge (CL) is generated from a counter.

10. Method to remotely unlock a personal identification number (PIN) according to one of claims 1 to 8, wherein the challenge (CL) is generated from a random number.

11. Method to remotely unlock a personal identification number (PIN) according to one of preceding claims, wherein the challenge (CL) comprises authentication data enabling the back-end device (BE_DEV) to authenticate the security device (S_DEV).

12. A security device (S_DEV) having means to implement the steps realized by the security device in a method as claimed in at least one of the preceding claims.

13. A back-end device (BE_DEV) having means to implement the steps realized by the back-end device in a method as claimed in at least one of the claims 1 to 11.
